Europäisches Patentamt

European Patent Office

Office européen des brevets

(19)

(11) EP 0 740 135 A2

(12) **EUROPÄISCHE PATENTANMELDUNG**

(43) Veröffentlichungstag:
30.10.1996 Patentblatt 1996/44

(51) Int Cl.⁶: $G01K\ 7/21$

(21) Anmeldenummer: 96810240.0

(22) Anmeldetag: 17.04.1996

(84) Benannte Vertragsstaaten:
CH DE DK FR IT LI

(30) Priorität: 28.04.1995 CH 1229/95

(71) Anmelder: Integrated System Technology IST AG
9630 Wattwil (CH)

(72) Erfinder: Knytl, Pavel
756 27 Valasska Bystrice 50 (CZ)

(74) Vertreter: Frei, Alexandra Sarah
Frei Patentanwaltsbüro
Hedwigsteig 6
Postfach 768
8029 Zürich (CH)

(54) **Verfahren zum Herstellen eines Temperaturfühlers**

(57)    Die Erfindung betrifft ein Verfahren zum Herstellen Vorfabrikates für einen Temperaturfühler und einen nach diesem Verfahren hergestellten Temperaturfühler, wobei ein Temperaturkoeffizientbereich durch Überlagerung unterschiedlicher Temperaturkoeffizienten von mindestens zwei Sensormaterialien vorgegeben wird dieser Temperaturverlaufbereich in Form eines Temperaturfühler-Element-Netzwerkes der ausgewählten Sensormaterialien auf das Halbfabrikat übertragen wird und der Temperaturverlaufbereich durch Veränderung abstimmbarer Widerstände $(R_1),(R_2),(R_3),(R_4)$ einer Grundschaltung des Temperaturfühler-Element-Netzwerkes auf einen gewünschten Temperaturverlauf eines Temperaturfühlers abgeglichen wird.

FIG. 3a

$$R = \frac{R_{NiCr} \cdot R_{Ni}}{R_{NiCr} + R_{Ni}}$$

FIG. 3b

2

**Beschreibung**

Die Erfindung betrifft ein Verfahren zum Herstellen eines Temperaturfühlers, sowie ein nach dem Verfahren hergestellter Temperaturfühler.

Temperaturfühler, insbesondere in der Dünn- und Dickschichttechnologie hergestellte Widerstands-Temperaturfühler weisen eine auf geeignete Substrate aufgebrachte Widerstandsschicht auf. Der Widerstand dieser Widerstandsschicht ist temperaturabhängig, durch Messung des Widerstandes des Temperaturfühlers ist somit die Umgebungstemperatur des Temperaturfühlers messbar. Zur genauen Zuordnung eines Widerstandswertes mit einer Umgebungstemperatur wird der Temperaturfühler nach Herstellung bezüglich eines Standards, beispielsweise 100 Ohm bei 0° Celsius, abgeglichen bzw. auf einen normierten Nennwiderstandswert geeicht. So werden Nennwiderstandswerte bezüglich eines Temperaturbereiches, beispielswiese von -30° Celsius bis +150° Celsius durch Veränderung der Dicke und der Länge der Widerstandsschicht angepasst. In bekannten Abgleichverfahren wird die Dicke der Widerstandsschicht mittels Laser, Sandstahl, Funkenerosion abgetragen, wodurch die Widerstandsschicht hochohmiger wird. In anderen Verfahren wird die Länge der Widerstandsschichten mittels Laser-Trimmen durch Unterbrechen von Abschnitten mäanderförmiger Widerstandsbahnen korrigiert.

Mit der Dünn- und Dickschichttechnologie lassen sich sehr klein dimensionierte Temperaturfühler mit relativ genauen, standardisierten Temperaturverhalten herstellen. Als Sensormaterialien werden beispielsweise mehr oder wendiger stark mit Fremdatomen dotierte Metalle wie Platin (Pt), Nickel (Ni), Molibdän (Mo) usw. verwendet. Hieraus werden standardgemäss Temperaturfühler mit Widerstandsschichten von beispielsweise 1 μm Dicke und für bekannte Sensortypen wie Pt-3850, Pt-3750, Pt-3930, Ni-6180, Ni-5000, Mo-3850 und Mo-3000 usw. hergestellt. Diese Sensoren erreichen Genauigkeiten von beispielsweise 0,3° Celsius bei 0° Celsius und 1° Celsius über den ganzen Temperaturbereich von beispielsweise -30° Celsius bis +150° Celsius durch Abgleichen des Widerstandes an einem bestimmten Punkt des Temperaturbereiches, bspw. bei 0°C. Die Widerstandswerte des so abgeglichenen Temperaturfühlers in allen anderen Punkten des Temperaturbereiches sind dann schon definiert durch die bekannte Temperaturabhängigkeit des Widerstandes. Solch ein Verfahren zum Abgleichen einer Vielzahl von Temperaturfühlern an einem definierten Punkt des Temperaturbereiches, ist in der CH-PS 667'733 beschrieben.

Ein Nachteil dieser Technologien besteht in der geringen Anzahl von Freiheitsgraden beim Abgleichen der ganzen Temperaturcharakteristik eines Temperaturfühlers. In gängigen Verfahren werden lediglich die Dicke und die Länge der Widerstandsschichten abgeglichen.

Ein weiterer Nachteil dieser Technologien besteht in der relativen Ungenauigkeit der abgeglichenen Temperaturfühler. Der Fehler der angezeigten Temperaturen ist relativ stark, er beträgt beispielsweise 0,3° Celsius in einem Punkt des Temperaturbereiches, bspw. 0° Celsius. Ausser dieses Punktes von 0° Celsius vergrössert sich der Fehler um den Betrag der Ungenauigkeit der Temperaturcharakteristik des Widerstandes. Für immer mehr Applikationen werden heutzutage Genauigkeiten von maximal 0,1° Celsius im gesamten Temeraturbereich verlangt, was ein feines, dementsprechend langwieriges Abgleichen benötigt.

Ein weiterer Nachteil dieser Technologien besteht darin, dass material- und sensorspezifisch Abgleichverfahren verwendet werden. Für jeden Sensortyp existieren andere Abgleichprozeduren.

Die Aufgabe der Erfindung besteht darin, ein Verfahren zum Herstellen von Temeperaturfühlern aufzuzeigen, welches eine Erhöhung der Anzahl der Freiheitsgrade beim Abgleichen des Widerstandes des Temperaturfühlers ermöglicht. Die gemäss dem Verfahren hergestellten Temperaturfühler sollen hochgenau sein. Gemäss dem Verfahren sollen die meisten bekannten standardisierten Sensortypen herstellbar sein. Diese Erfindung soll einen sehr schnellen, einfachen und dadurch wirtschaftlichen Abgleich von Temperaturcharakteristiken eines Temperaturfühlers ermöglichen.

Diese Aufgabe wird durch die Erfindung, wie sie in den Patentansprüchen definiert ist gelöst.

Die Idee der Erfindung beruht auf einem neuen Ansatz der Problematik der Temperaturmessung mit Temperaturfühlern. Anstatt den Temperaturverlauf des Widerstandswertes eines einzigen Sensormaterials in einer Art Widerstands-Netzwerk mit einem idealen Widerstandswert dieses einen Sensormaterials abzugleichen, erfolgt erfindungsgemäss ein Simulieren eines Temperaturverlaufes des Widerstandes mindestens zweier Sensormaterialien. Eine beliebige Widerstandscharakteristik eines simulierten Temperaturfühlers wird durch Überlagerung bekannter Temperaturcharakteristiken synthetisiert oder vorgegeben. Diese Widerstandscharakteristik wird beispielsweise am Reissbrett, am Computer entworfen und sie wird dann in einem Temperaturfühler-Elemente-Netzwerk, ausgehend von einer erfindungsgemässen Grundschaltung aus Sensormaterialien realisiert.

Die Erfindung beruht insofern auf einem vollkommen neuen Ansatz, weil sie sich von einem alten und bewährten Schema der Fachwelt löst. Die Erfindung realisiert nicht eine abgleichbare Widerstandscharakteristik eines Temperaturfühlers aus einem einzigen Standardsensormaterials, sondern sie simuliert eine künstliche Widerstandscharakteristik aus mehreren Standardsensormaterialien. Beispielsweise simulieren zwei Schichten Nickel und Nickel-Chrom als Ausgangssensormaterialien eine Widerstandscharakteristikbereich eines Universal-Sensors.

Die Anzahl der Freiheitsgrade beim Design von Temperaturfühlern wird durch Schaffung diese künstlichen, abgleichbaren Temperaturkoeffizientbereich erhöht. Die Erfindung simuliert Widerstandscharakteristikbereiche, die in universell verwendbaren, abgleichbaren Halbfabrikate realisiert werden und die dann auf eine anwendungsspezifische Temperaturcharakteristik eines Temperaturfühlers abgeglichen oder fixiert wird. Zu diesem Zweck weisen die Halbfabrikate eine Grundschaltung auf. Beispielsweise bilden zwei Schichten Nickel und Nickel-Chrom als Ausgangssensormaterialien ein abstimmbares Halbfabrikat. Dieses Halbfabrikat wird dann durch Abstimmen der Grundschaltung auf die Widerstandscharakteristik eines anwendungsspezifischen Sensortyps abgeglichen.

Die Genauigkeit und die Variationsmöglichkeiten dieser aus einem Widerstandscharakteristikbereich mehrerer Sensormaterialien gebildete Widerstandscharakteristik sind höher als diejenigen bei der Abstimmung der Widerstandscharakteristik eines einzigen Sensormaterials. Die Herstellung universell abstimmbarer Halbfabrikate reduziert den Aufwand, die Lagerhaltung von Halbfabrikaten ist effizienter und somit fallen geringere Kosten an.

Anhand der folgenden Figuren wird die Erfindung im Detail erläutert:

Fig. 1  zeigt eine graphische Darstellung der Temperaturcharakteristiken eines Sensormaterials in Abhängigkeit von der Temperatur.

Fig. 2  zeigt eine graphische Darstellung der Temperaturcharakteristiken zweier verschiedener Sensormaterialien in Abhängigkeit von der Temperatur.

Fig. 3  a und b zeigen eine grafische Darstellung der Temperaturcharakteristiken zweier Widerstände, die in einer elektrischen Grundschaltung in Serie (3a) oder parallel (3b) geschaltet sind.

Fig. 4  zeigt eine schmatische Darstellung einer verwendeten Grundschaltung zur Synthetisierung eines Temperaturkoeffizienten-Netzerkes eines erfindungsgemässen Temperaturfühlers.

Fig. 5  zeigt eine schematische Darstellung eines Blockdiagramms der erfindungsgemässen Synthetisierung eines simulierten Temperaturkoeffizientbereiches aus zwei Sensormaterialen.

Fig. 6  zeigt eine realisierte Leiterbahnstruktur eines erfindungsgemässen Temperaturfühlers.

Die Abhängigkeit des elektrischen Widerstandes R eines Sensormaterials von der Temperatur T lässt sich allgemein durch den folgenden Polynom R(T) ausdrükken:

$$R(T) = R_0 \, (1 + AT + BT^2 + CT^3 + ...)$$

Dieser Polynom R(T) gibt bei einer Temperatur T=0° Celsius einen Widerstand R=$R_0$ an. Für Temperaturen T ungleich 0° Celsius gibt der Polynom R(T) einen Widerstand R als Funktion von Gliedern unterschiedlicher Ordnung bezüglich der Temperatur T an. Die Koeffizienten A,B,C, ... werden Sensormaterialkonstanten genannt. Für reine Metalle wie beispielswiese Nikkel oder Platin ist der Koeffizient 1. Ordnung oder Temperaturkoeffizient A positiv. Für Legierungen und Metallegierungen wie beispielsweise Nickel-Chrom ist der Wert dieses Koeffizienten 1. Ordnung vergleichsweise niedriger.

Der Temperaturkoeffizient $\alpha$ lautet in linearisierter Form wie folgt:

$$\alpha(T_a, T_b) = (R_a)^{-1} \, (R_b - R_a)/(T_b - T_a)$$

$T_a, T_b$ sind zwei beliebige Temperaturen, $R_a, R_b$ sind die dementsprechende Widerstandswerte. In der Sensorindustrie werden beispielsweise die Temperatur $T_a$=0° Celsius und die Temperatur $T_b$=100° Celsius definiert. Ein standardisierter Platinsensor Pt-3850 besitzt einen Widerstand $R_b$=138,50 Ohm und einen Widerstand $R_a$=100,00 Ohm, sodass gemäss obiger linearisierter Form ein normierter Wert des Temperaturkoeffizienten $\alpha$=3850 $10^{-6}$ $K^{-1}$ resultiert. Der Widerstandswert des Sensors ist im Suffix des Sensortyps angegeben. Je nach Sensormaterial ist dieser Wert unterschiedlich. Bekannte Sensortypen sind beispielsweise Pt-3850, Pt-3750, Pt-3920, Ni-6180, Ni-5000, Mo-3850 und Mo-3000 usw..

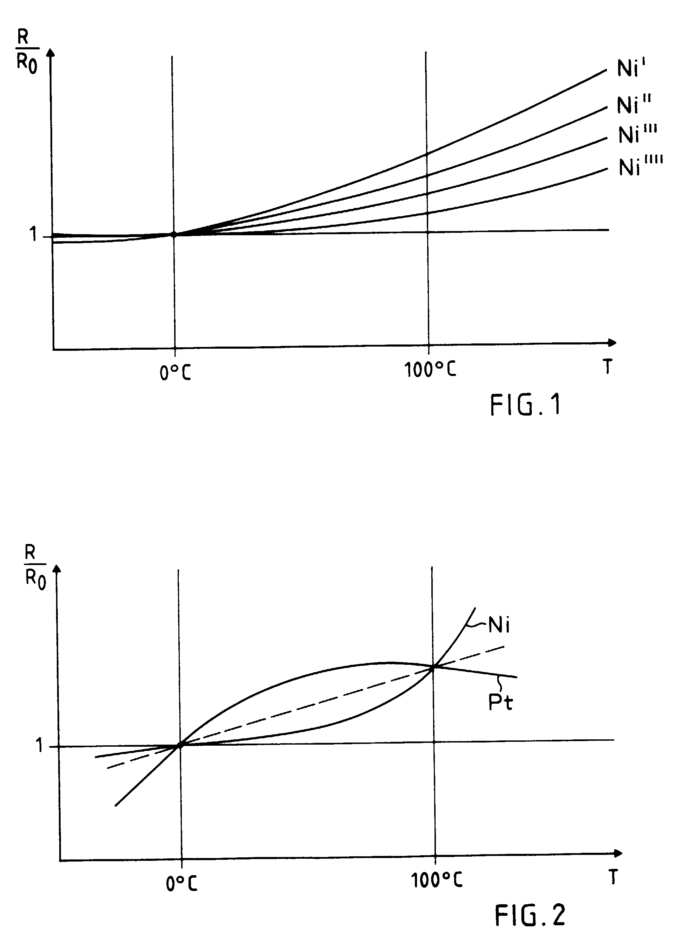

Die **Figur 1** zeigt eine beispielhafte graphische Darstellung der Temperaturcharakteristiken eines Materials A. Der Verlauf des Widerstandes R(T) von A ist für unterschiedlich dotierte Nickel-Sensormaterialien Ni',Ni", Ni''', Ni'''' in Abhängigkeit von der Temperatur T aufgetragen. Beispielsweise sind die Temperaturen T=0° Celsius und T=100° Celsius eingetragen. Die Nickel-Sensormaterialien Ni',Ni",Ni''', Ni'''' sind unterschiedlich stark mit Fremdatomen, beispielsweise mit Titan dotiert und weisen verschiedene hohe Widerstandswerte R auf. Der Temperaturkoeffizient $\alpha$ ist die Neigung der Kurven der Sensormaterialien Ni',Ni",Ni''', Ni''''. Die Krümmung dieser Temperaturcharakteristiken A ist beispielsweise konvex bezüglich der Temperaturachse oder Abszisse. Dies Form ist eine Materialeigenschaft des Nickel und sie ist von der Dotierung praktisch unbeeinflusst. In der Folge wird eine Ausführungsform mit der Paarung Ni-NiCr im Detail diskutiert. Weitere Werkstoffkombinationen wie Ni mit Tantalnitrid, Nickel mit Tantal-Aluminium, Nickel mit Nickel-Chrom-Aluminium geben mit erfindungsgemässem Vorgehen weitere Möglichkeiten der Nachbildung bekannter und neuer Sensortypen.

Die **Figur 2** zeigt eine beispielhafte Darstellung zweier Temperaturcharakteristiken des Widerstandes verschiedener Sensormaterialien. Als Sensormaterialien sind beispielsweise Platin (Pt) und Nickel (Ni) aufgetragen. Die Nickelschicht ist bspw. gerade so hoch mit Fremdatomen dotiert, dass die Widerstandswerte in 0° Celsius und 100° Celsius übereinander stimmen. Dann sind auch die Temperaturkoeffizienten beider Materialien gleich und es kann sich bspw. um eine Simulation eines Platinfühlers mit einem Nickelfühler handeln. Wegen der unterschiedlichen Krümmung der beiden Kurven stimmen die Widerstandswerte der beiden Temperaturfühler ausser an den Punkten von 0° Celsius und 100° Celsius an keinem weiteren Punkt. Der Simulationsfehler bei bspw. 50° Celsius ist grösser als 1° Celsius und ist mit gängigen Verfahren nicht zu korrigieren.

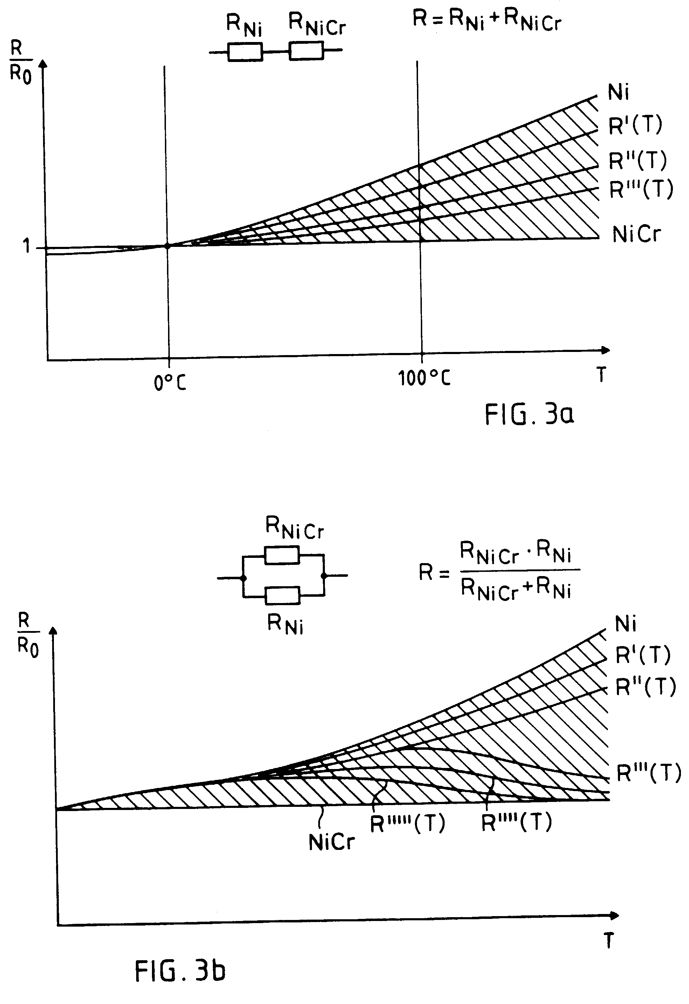

Die **Figuren 3a und 3b** zeigen eine grafische Darstellung einer künstlichen Temperaturcharakteristik des Widerstandes R gebildet aus der Ueberlagerung zweier Temperaturcharakteristiken der Sensormaterialien NiCr und Ni, wobei die beiden Temperaturfühlerelemente R1 und R2 in Serie (3a) oder parallel (3b) geschaltet sind. Der Temperaturverlauf des Widerstandes des ersten Sensormaterials NiCr ist relativ flach, der Temperaturverlauf des Widerstandes zweiten Sensormaterials Cr ist relativ steil. Durch Kombination der Beiträge der beiden Widerstände sind alle Punkte der Widerstandswerte innerhalb der schraffierten Fläche des Temperaturcharakteristika-Feldes erreichbar bzw. realisierbar. Es ist bemerkenswert, dass die Parallelschaltung der Widerstände mindestens in einem Teil der schraffierten Fläche eine umgekehrte Krümmung der Temperaturcharakteristiken ermöglicht. Diese Krümmung ist aber in jedem Punkt der Fläche fest gegeben und für jede der beiden Schaltungen allein nicht zu verändern. Erst bei der Kombination der beiden Schaltungen nach Fig. 3a und Fig. 3b steigt die Zahl der Freiheitsgrade des Systems genug hoch an, um die Krümmung der Temperaturcharakteristiken ändern zu können.

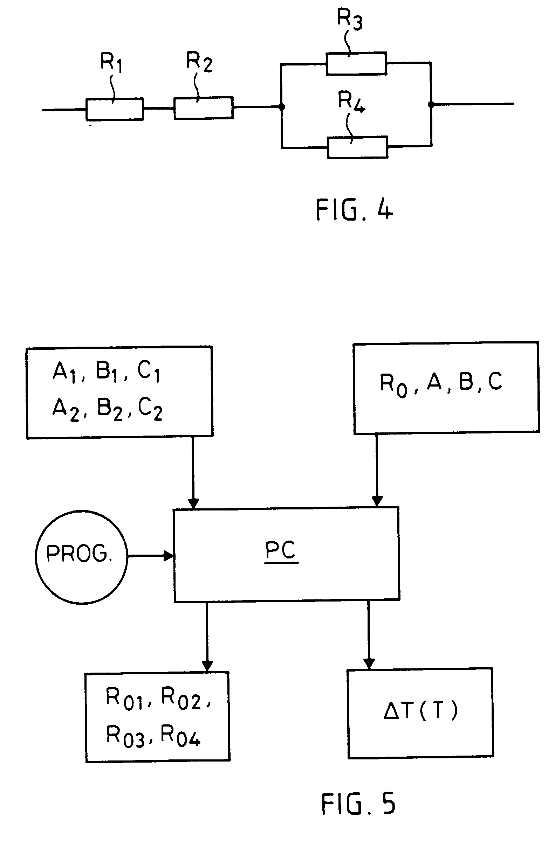

Die **Figur 4** zeigt eine schematische Darstellung einer Grundschaltung der erfindungsgemässen Synthetisierung eines simulierten Temperaturkoeffizientenbereiches aus mindestens zwei Sensormaterialen. Diese Sensorgrundschaltung besteht aus vier Widerständen $R_1, R_2, R_3, R_4$, die in Serie und/oder parallel verschaltet sind. Vorteilhafterweise sind die Widerstände $R_3, R_4$ parallel verschaltet und die Widerstände $R_1, R_2$ sind mit diesen parallel verschalteten Widerständen $R_3, R_4$ in Serie geschaltet.

Jeder dieser Widerstände $R_1, R_2, R_3, R_4$ ist in einem relativ breiten Bereich von beispielsweise 0 Ohm bis $10^{+5}$ Ohm einstellbar. Erfindungsgemäss werden mindestens zwei verschiedene Sensormaterialien mit sich unterscheidenden Temperaturkoeffizienten verwendet. Beispielsweise bilden die Widerstände $R_1, R_3$ ein erstes Sensormaterial und die Widerstände $R_2, R_4$ bilden ein zweites Sensormaterial. Das erste Sensormaterial ist beispielsweise Nickel-Chrom mit einem relativ niedrigen Temperaturkoeffizienten von $50,00 \cdot 10^{-6}$ $K^{-1}$, das zweite Sensormaterial ist beispielsweise Nickel mit einem relativ hohen Temperaturkoeffizienten von $6180 \cdot 10^{-6}$ $K^{-1}$. Vorteilhafterweise werden Sensormaterialien mit sich relativ stark unterscheidenden Temperaturkoeffizienten verwendet. Natürlich lassen sich für diese Grundschaltung auch mehr als zwei Sensormaterialien verwenden. Diese Grundschaltung lässt sich natürlich auch für den Einsatz von mehr als zwei Sensormaterialien erweitern. Dem Fachmann stehen bei Kenntnis der Erfindung vielfältige Möglichkeiten der Variation offen.

Die **Figur 5** zeigt schmatische Darstellung eines verwendeten Blockdiagramms zur Synthetisierung eines Temperaturkoeffizienten-Netzwerkes. Diese Synthese liefert einen Entwurf für das Abgleichen eines abgleichbaren Halbfabrikat zur Herstellung eines Temperaturfühlers mit der gewünschten Temperaturcharakteristik $R = R_0 (1 + AT + BT^2 + CT^3 + ...)$. Ausgehend von einer Grundschaltung gemäss Figur 4 werden die Grundparameter zur Berechnung von Widerständen $R_1, R_3$ des ersten Sensormaterials und $R_2, R_4$ des zweiten Sensormaterials gemäss den folgenden Polynonem miteinander verknüpft:

$$R_1 = R_{01} (1 + A_1 T + B_1 T^2 + C_1 T^3 + ...)$$

$$R_2 = R_{02} (1 + A_2 T + B_2 T^2 + C_2 T^3 + ...)$$

$$R_3 = R_{03} (1 + A_1 T + B_1 T^2 + C_1 T^3 + ...)$$

$$R_4 = R_{04} (1 + A_2 T + B_2 T^2 + C_2 T^3 + ...)$$

$R_{01}, R_{02}, R_{03}$ und $R_{04}$ sind die gesuchten Sensorgeometriekonstanten und geben den elektrischen Widerstand der vier Widerstände bei der Temperatur $T=0°$ Celsius an. Die Koeffizienten $A_1, A_2, B_1, B_2, C_1, C_2$, sind Sensormaterialkonstanten zur Berechnung des elektrischen Widerstandes der beiden Sensormaterialien Temperaturen T ungleich 0° Celsius. Natürlich lassen sich gemäss diesem Ansatz auch mehr als zwei Sensormaterialien miteinander verknüpfen.

Gemäss Figur 4 sind die Widerstände $R_1, R_2, R_3, R_4$ über die folgende elektrische Grundschaltung zu einem gewünschten Widerstand R miteinander verknüpft:

$$R = R_1 + R_2 + (R_3 R_4)/(R_3 + R_4)$$

Die Synthetisierung des Temperaturfühler-Netzwerkes erfolgt beispielsweise rechnergestützt mittels eines Rechners PC. Eine solche Synthese ist objekt- und anwendungsbezogen. D.h. die Synthese findet in einem gewünschten Temperaturbereich statt, beispielsweise von -30° Celsius bis +150° Celsius, sie findet für einen Temperaturverlauf eines gewünschten zu simulierenden Sensormaterials statt, und sie liefert über Länge und Dicke der Widerstandsschichten $R_1, R_2, R_3, R_4$ einen gewünschten Widerstand R.

Beispielsweise werden die Werte bekannter, tabellierter Temperaturkoeffizienten $A_1, A_2, B_1, B_2, C_1, C_2, \ldots$ zweier Sensormaterialien überlagert, die wie in der Beschreibung gemäss den Figuren 3 und 4 erwähnt, einen gewünschten Temperaturverlauf eines synthetischen Temperaturcharakteristikbereiches bilden. Die Konstanten der gewünschten Temperaturcharakteristik Ro, A,B,C werden in die obigen Polynome eingesetzt und zusammen mit der obigen Gleichung $R = R_1 + R_2 + (R_3 R_4)/(R_3 + R_4)$ liefern sie Werte $R_{01}, R_{02}, R_{03}$ und $R_{04}$ für die Widerstände $R_1, R_2, R_3$ und $R_4$. Für jeden gefundenen Widerstandswert $R_{01}, R_{02}, R_{03}$ und $R_{04}$ liefert die Simulation auch die theoretische Abweichung von der gewünschten Charakteristik des simulierten Temperatursensors im gegebenen Temperaturbereich. Ist diese Abweichung zu gross, so kann die Simulation neu durchgeführt werden, bspw. für eine erweiterte Schaltung mit mehr Freiheitsgraden. Die Anzahl der Freiheitsgrade beim Design eines Temperaturfühlers kann durch Zufügen der im Netzwerk eingeschalteten Widerstände und durch Zufügen der anderen Sensormaterialien erhöht werden.

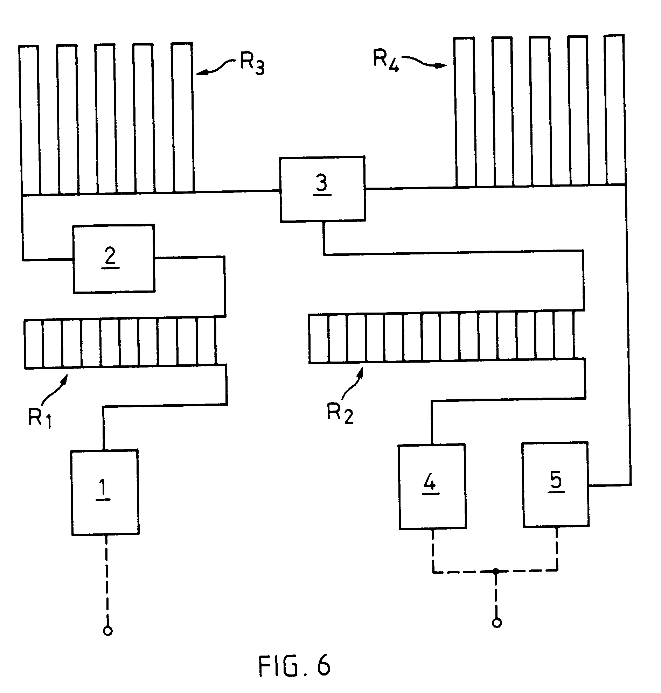

Die **Figur 6** zeigt einen Teil einer realisierten Leiterbahnstruktur eines erfindungsgemässen Temperaturfühlers. Die Sensormaterialien sind als beispielsweise µm-dicke Schichten, die in Dünnschichtverfahren auf ein elektrisch isolierendes Substrat aufgebracht sind und dort Leiterbahnstrukturen in Form von Widerständen $R_1, R_2, R_3, R_4$ und diese verbindende Strompfade und Kontakten 1,2,3,4,5 bilden. In einem Verfahrensschritt werden mehrere Halbfabrikate für Temperaturfühler nebeneinander auf einem Substrat hergestellt. Solche Halbfabrikate weisen ein abgleichbares, synthetisierten Temperaturkoeffizienten-Netzwerkes gemäss der Beschreibung zu Figur 5 auf. Die Temperaturfühler werden daraufhin durch Abgleichen der Grundschaltung der Halbfabrikate hergestellt.

Ein jedes der Halbfabrikate für erfindungsgemässe Temperaturfühler weist Widerstände $R_1, R_2, R_3, R_4$ aus mindestens zwei verschiedenen Sensormaterialien nach der Grundschaltung gemäss Figur 3 auf. Die Widerstände $R_1, R_2, R_3, R_4$ sind regel- und abgleichbar. Zu diesem Zweck sind sie in Teilstrukturen aufgeteilt, die durch geeignete Mittel, beispielsweise mittels Laser-Trimmen abgleichbar sind. Jeder einzelne der Widerstände $R_1, R_2, R_3, R_4$ ist abgleichbar. Durch Unterbrechen von Teilen der Teilstrukturen werden die Werte der Widerstände verändert. An mehreren Stellen dieses Halbfabrikates sind Kontakte 1,2,3,4,5 angebracht, um die einzelnen Widerstandswerte beim Abgleichen messen zu können. Zwischen den Kontakten 1 und 2 wird der Widerstandswert des Widerstandes $R_1$ gemessen. Zwischen den Kontakten 2 und 3 wird der Widerstandswert des Widerstandes $R_2$ gemessen. Zwischen den Kontakten 3 und 5 wird der Widerstandswert des Widerstandes $R_3$ gemessen. Zwischen den Kontakten 3 und 4 wird der Widerstandswert des Widerstandes $R_4$ gemessen. Der Kontakt 1 dient ferner zum Kontaktieren an einer Temperaturmessstelle.

Die Kontakte 4 und 5 müssen während des Abgleichens getrennt sein, um die Widerstandswerte der Widerstände R3 und R4 unabhängig voneinander zu messen und abgleichen zu können. Erst nach dem Abgleich werden die Kontakte 4 und 5 miteinander verbunden, vorteilhafterweise während des Schweissens oder Lötens der Aussenanschlüsse. Diese Verbindung bildet nachher den anderen Kontakt an einer Temperaturmesstelle.

Jeder dieser Widerstände $R_1, R_2, R_3, R_4$ ist in einem relativ breiten Bereich von beispielsweise 0 Ohm bis $10^{+5}$ Ohm abgleichbar. Beispielsweise bilden die Widerstände $R_1, R_3$ ein erstes Sensormaterial und die Widerstände $R_2, R_4$ bilden ein zweites Sensormaterial. Das erste Sensormaterial ist beispielsweise Nickel-Chrom mit einem relativ niedrigen Temperaturkoeffizienten von $50{,}00 \cdot 10^{-6}$ K$^{-1}$, das zweite Sensormaterial ist beispielsweise Nickel mit einem relativ hohen Temperaturkoeffizienten von $6180 \cdot 10^{-6}$ K$^{-1}$. Die Widerstände $R_3, R_4$ weisen mäanderartige Teilstrukturen auf, sodass relativ lange Leiterbahnstrukturen abgleichbar sind.

Die Anzahl der Freiheitsgrade beim Design eines Temperaturfühlers wird durch die Simulation eines künstlichen Temperaturcharakteristik erhöht. Erfindungsgemäss weisen die Halbfabrikate universelle, d. h. abgleichbare simulierte Temperaturcharakteristikbereiche auf, die dann auf eine anwendungsspezifische Temperaturcharakteristik abgeglichen werden. Beispielsweise bilden zwei Schichten Nickel und Nickel-Chrom als Ausgangssensormaterialien des Halbfabrikates einen Widerstandscharakteristikbereich gemäss Figur 3, der auf eine beliebigen Sensortyp innerhalb dieses Bereiches abgleichbar ist. Im Halbfabrikat ist ein simulierter Temperaturcharakteristikbereich gemäss Figur 3 realisiert. Durch Abstimmen der Grundschaltung wird diese Charakteristik verändert. Je nach dem wie stark die Widerstände $R_1, R_2, R_3, R_4$ verändert werden, wird die resultierende Temperaturcharakteristik mehr in die Richtung der Nickel Temperaturcharakteristik oder mehr in Richtung der Nickel-Chrom Temperaturcharakteristik gemäss Figur 3 verschoben. Mit ein und demselben Halbfabrikat lassen sich somit viele im Bereich zwischen der Nickel Temperaturcharakteristik und der Nickel-Chrom Temperaturcharakteristik gemäss Figur 4 liegenden Temperaturcharakteristiken realisieren.

Diese Halbfabrikate sind somit quasi universell einsetzbar. Dies hat Vorteile bei der Lagerhalterung solcher Temperaturfühler, da nur noch ein solcher universeller Typ Halbfabrikat gelagert werden muss. Die Lagerhaltung gewinnt somit im Rahmen vom Lean-production stark an Effizienz. Andererseits sind Sonderserien rasch herstellbar, da sich die simulierten Temperaturcharakteristika durch Wahl der sie bildenden Temperaturkoeffizienten über einen breiten Bereich, über einen Bereich von über einer Grössenordnung, beispielsweise veränderbar sind.

**Patentansprüche**

1. Verfahren zum Herstellen eines Halbfabrikates für einen Temperaturfühler, **dadurch gekennzeichnet**, dass ein Temperaturcharakteristikbereich durch Überlagerung unterschiedlicher Temperaturkoeffizienten von mindestens zwei Sensormaterialien vorgegeben wird und dass dieser Temperaturcharkteristikbereich in Form eines Temperaturfühler-Elemente-Netzwerkes mit mehr als zwei Widerständen der ausgewählten Sensormaterialien auf ein Substrat übertragen wird.

2. Verfahren gemäss Anspruch 1, **dadurch gekennzeichnet**, dass das Temperaturfühler-Elemente-Netzwerk der ausgewählten Sensormaterialien in Dünnschicht- oder Dickschichtverfahren als elektrische Widerstandsschichten $(R_1),(R_2),(R_3),(R_4)$ auf ein elektrisch isolierendes Substrat aufgebracht wird, dass diese Widerstände $(R_1),(R_2),(R_3)$ und $(R_4)$ des Temperaturfühler-Elemente-Netzwerkes über Strompfade miteinander verkoppelt aufgetragen werden und dass die Widerstände $(R_1),(R_2),(R_3),(R_4)$ des Temperaturfühler-Elemente-Netzwerkes durch Trimmen veränderbar sind.

3. Verfahren gemäss Anspruch 2, **dadurch gekennzeichnet**, dass der Temperaturverlaufbereich in Form eines Temperaturfühler-Element-Netzwerkes durch Veränderung der abstimmbaren Widerstände $(R_1),(R_2),(R_3),(R_4)$ der Grundschaltung auf einen gewünschten Temperaturverlauf eines Temperaturfühlers abgeglichen wird.

4. Halbfabrikat hergestellt im Verfahren gemäss Anspruch 1, **dadurch gekennzeichnet**, dass ein erstes Sensormaterial eine erste Widerstansgruppe $(R_1)$ und $(R_3)$ bildet, dass ein zweites Sensormaterial eine zweite Widerstandsgruppe $(R_2)$ und $(R_4)$ bildet, dass die Widerstände $(R_1),(R_2),(R_3),(R_4)$ beider Gruppen durch Trimmleitungen verbunden sind und durch Trimmen der Widerstände $(R_1),(R_2),(R_3),(R_4)$ kombinier- und abstimmbar sind.

5. Halbfabrikat gemäss Anspruch 4, **dadurch gekennzeichnet**, dass die Widerstände zweier Gruppen $(R_1),(R_2),(R_3),(R_4)$ über eine Grundschaltung $(R) = (R_1) + (R_2) + ((R_3) (R_4))/(R_3)(R_4)$ zu einem Gesamtwiderstand $(R)$ verknüpft sind und welche Gruppen durch Mittel zum Trimmen kombinier- und abstimmbar sind.

6. Halbfabrikat gemäss Anspruch 5, **dadurch ge-**

**kennzeichnet**, dass die Widerstände $(R_1),(R_2),(R_3),(R_4)$ bzw. deren Gruppen auf einen gewünschten Temperaturverlauf eines bestimmten Temperaturfühlers anderer Sensortypen abgleichbar sind.

7. Halbfabrikat gemäss Anspruch 4, **dadurch gekennzeichnet**, dass das erste Sensormaterial einen niedrigen Temperaturkoeffizienten kleiner 100 $10^{-6}$ $K^{-1}$ aufweist, dass das zweite Sensormaterial einen hohen Temperaturkoeffizienten grösser 1000 $10^{-6}$ $K^{-1}$ aufweist, sodass in dem durch diese Temperaturkoeffizienten begrenzter Temperaturcharakteristikbereich von 100 bis 1000 $10^{-6}$ $K^{-1}$ ein gewünschter Temperaturverlauf eines Temperaturfühlers abgleichbar ist.

8. Halbfabrikat nach einem der Ansprüche 4 bis 7, **dadurch gekennzeichnet**, dass die Sensormaterialien aus Nickel und einer Nickellegierung bestehen.

9. Halbfabrikat nach Anspruch 8, **dadurch gekennzeichnet**, dass die Nickellegierung eine Chrom-Nickel-Legierung ist.

10. Temperaturfühler hergestellt nach dem Verfahren nach Anspruch 1 oder und/oder aus einem Halbfabrikat nach Anspruch 4, **dadurch gekennzeichnet**, dass er ein getrimmtes Temperaturfühler-Elemente-Netzwerk bestehend aus mehr als zwei Widerständen aus verschiedenen Sensormaterialien aufweist.

11. Temperaturfühler nach Anspruch 10, **dadurch gekennzeichnet**, dass die Sensormaterialien aus Nickel und einer Nickellegierung bestehen.

FIG.1

FIG.2

FIG. 3a

FIG. 3b

$R_1$  $R_2$  $R_3$

$R_4$

FIG. 4

$A_1, B_1, C_1$
$A_2, B_2, C_2$

$R_0, A, B, C$

PROG. → PC

$R_{01}, R_{02}, R_{03}, R_{04}$

$\Delta T(T)$

FIG. 5

FIG. 6